# FASCICULE DE BREVET EUROPEEN

(11) **EP 3 297 876 B1**
(45) Date de publication et mention de la délivrance du brevet: **07.07.2021**
(21) Numéro de dépôt: 16731216.4
(22) Date de dépôt: 19.05.2016
(51) Int. Cl.: B60S 13/00, E04H 6/18, E04H 6/24, E04H 6/30, E04H 6/32

(54) **CONVOYEURS MOBILES DESTINÉS AU DÉPLACEMENT D'UN VÉHICULE À 4 ROUES**
BEWEGLICHE FÖRDERER ZUM BEWEGEN EINES VIERRÄDRIGEN FAHRZEUGS
MOVABLE CONVEYORS FOR MOVING A FOUR-WHEEL VEHICLE

(30) Priorité: 20.05.2015 FR 1554528
(43) Date de publication de la demande: 28.03.2018
(73) Titulaire: Stanley Robotics, 78000 Versailles (FR)
(72) Inventeur: BOUSSARD, Clément, 75004 Paris (FR); CORD, Aurélien, 75014 Paris (FR)
(74) Mandataire: IP Trust
(86) Numéro de dépôt international: PCT/FR2016/051195
(87) Numéro de publication internationale: WO 2016/189233

(56) Documents cités:
- WO-A1-2005/059276
- CN-Y- 2 399 477
- DE-B- 1 045 075
- DE-B- 1 228 390
- US-A1- 2010 086 385

## Description

### Domaine de l'invention

La présente invention concerne le domaine des convoyeurs mobiles destinés au déplacement d'un véhicule à quatre roues, en particulier - mais non exclusivement - pour le parcage automatique de véhicules ou le déplacement de véhicules automobiles en cours de fabrication.

De tels convoyeurs comprennent généralement un châssis mobile équipé d'une paire de fourches qui sont glissées sous le véhicule puis relevées pour que les roues de véhicules n'entrent plus en contact avec le sol. Le convoyeur peut alors déplacer le véhicule jusqu'à un nouvel emplacement où il est déposé par abaissement et retrait des fourches.

### Etat de la technique

On connaît dans l'état de la technique le brevet européen EP2614198 décrivant un dispositif pour le stockage d'un véhicule à moteur, pouvant se déplacer transversal par rapport à son axe longitudinal sur un terrain de stockage. Ce dispositif sans conducteur comprend un châssis motorisé qui est parallèle à l'axe longitudinal du véhicule. Une paire de fourches est déplacée horizontalement pour passer d'un côté des roues du véhicule.

On connaît aussi le brevet allemand DE1228390 décrivant un dispositif constitué par un plateau supportant deux longerons mobiles transversalement, prolongés chacun par des bras latéraux mobiles pour venir en contact avec la bande de roulement de chaque roue. Ce plateau est monté sur des roulettes permettant le déplacement du véhicule dans un chemin formé dans une fosse. DE1045075B décrit un autre convoyeur selon l'état de la technique.

Le modèle d'utilité chinois CN2399477 décrit un dispositif de stationnement selon la préambule de la revendication 1, constituée par un longeron de longueur constante supportant un premier sous-châssis fixe, et deux sous-châssis mobiles actionnés chacun par un vérin.

On connaît aussi la demande de brevet WO2005/059276 décrivant un chariot et à un système de stationnement utilisant ce chariot pour transporter des automobiles et analogues. Le chariot de la présente invention comporte un corps principal susceptible de se déplacer; et un moyen de blocage ayant au moins une première et une seconde plaque mobile et au moins une paire de mâchoires de blocage. Le système de stationnement de la présente invention comprend une table de chargement, une table différentielle mobile relativement à la table de chargement, un chariot mobile relativement à la table différentielle, un dispositif d'entraînement longitudinal, un mécanisme de transmission linéaire à tube de puissance, et une station à vanne motorisée associée à un système de commande électrique. Le chariot de la présente invention possède une structure simple et facilite un positionnement souple et automatique, il permet le blocage et le levage d'automobiles ou de châssis de véhicules d'empâtement différent, et il rend possible un transport bidirectionnel ainsi que le dépôt ou la récupération d'automobiles.

On connaît encore la demande de brevet US2010/0086385 décrivant un autre exemple de dispositif de déplacement de véhicule dans un parking.

### Inconvénients de l'art antérieur

La solution à chargement latéral telle que celle décrite dans le brevet EP2614198 nécessite un espace important sur le coté du véhicule pour permettre l'approche du dispositif de transport, son positionnement parallèlement au véhicule et l'actionnement des fourches soulevant le véhicule.

La solution décrite dans le brevet allemand DE1228390 implique une hauteur de l'ensemble formé par le plateau, les longerons et les roulettes rendant impossible le glissement sous des véhicules modernes dont la garde au sol ne dépasse pas quelques centimètres.

La solution décrite par le modèle d'utilité CN2399477 nécessite le déplacement de deux sous-châssis, avec deux vérins indépendants, chacun de ces sous-châssis comportant des roulettes, rendant très difficile le déplacement et le guidage du dispositif. Or pour une application de type rangement de véhicule dans un parking, la manoeuvrabilité du dispositif est essentielle, et nécessite une capacité de déplacement avec des rayons de courbure très réduits. La solution proposée par le modèle d'utilité CN2399477 autorise un déplacement rectiligne, ou au mieux avec un très grand rayon de giration, rendant impossible le déplacement dans des espaces restreints tels qu'un parking où on cherche à optimiser l'espace et augmenter la densité de véhicules.

Ces solutions de l'art antérieur ne sont donc pas adaptées à un déplacement sans conducteur d'un véhicule à quatre roues, de manière simple, robuste et fiable.

### Solution apportée par l'invention

Afin de répondre à ces inconvénients, la présente invention concerne selon son acception la plus générale un convoyeur selon la revendication 1 pour le déplacement de véhicules à quatre roues, comprenant un châssis muni de bras mobiles entre une position dans laquelle ils permettent le déplacement dudit châssis sous le véhicule, et une position dans laquelle ils viennent en contact avec les bandes de roulement desdites roues, caractérisé en ce que ledit châssis est télescopique et comprend deux segments portant chacun une paire de bras,
- l'une au moins des paires de bras étant articulés pour permettre un déplacement entre une position perpendiculaire à l'axe longitudinal du châssis avec un extension au moins égale à la voie du véhicule, et une position repliée pour occuper une largeur inférieure à la distance comprise entre les flancs intérieurs des roues du véhicule,
- lesdits segments étant mobiles entre une position où les bras ne sont pas en contact avec les roues, et une position où chaque bras vient en contact avec la bande de roulement d'une desdites roues, pour assurer le relèvement ou la dépose du véhicule.

La hauteur du châssis et des éléments qu'il supporte, pour la partie destinées à être engagée sous le véhicule à transporter, est déterminée pour être inférieure à la garde au sol du véhicule.

Selon une première variante, ladite paire de bras articulée est mobile transversalement.

Selon l'invention, ladite paire de bras articulée est mobile par pivotement.

Selon un premier mode de mise en œuvre, ledit relèvement du véhicule est assuré par l'interaction, de chaque côté du véhicule, entre le bras arrière avec l'arrière de la zone de la bande de roulement de la roue arrière d'une part, et entre le bras avant avec l'avant de la zone de la bande de roulement de la roue avant d'autre part.

Le terme « arrière » s'entend, au sens du présent brevet, en fonction du sens de déplacement normal du convoyeur. Lorsque le véhicule est chargé « à l'envers » les roues avant du véhicule seront désignées par « roues arrières » au sens du présent brevet.

Selon un deuxième mode de mise en œuvre, ledit relèvement du véhicule est assuré par l'interaction, de chaque côté du véhicule, entre le bras arrière avec l'avant de la zone de la bande de roulement de la roue arrière d'une part, et entre le bras avant avec l'arrière de la zone de la bande de roulement de la roue avant d'autre part.

Selon un autre mode de mise en œuvre, ledit relèvement du véhicule est assuré par l'interaction entre l'un desdits bras avec l'une des parties de la bande de roulement d'une roue et un bras additionnel venant en contact avec une partie opposée de la bande de roulement de la même roue.

L'invention concerne également un système selon la revendication 7 de parking automatique comprenant au moins un convoyeur selon l'une quelconque des revendications 1-6 pour le déplacement de véhicules à quatre roues, comprenant un châssis muni de bras mobiles entre une position dans laquelle ils permettent le déplacement dudit châssis sous le véhicule, et une position dans laquelle ils viennent en contact avec les bandes de roulement desdites roues, caractérisé en ce que ledit châssis est télescopique et comprend deux segments portant chacun une paire de bras,
- l'une au moins des paires de bras étant articulés pour permettre un déplacement entre une position perpendiculaire à l'axe longitudinal du châssis avec un extension au moins égale à la voie du véhicule, et une position repliée pour occuper une largeur inférieure à la distance comprise entre les flancs intérieurs des roues du véhicule,
- lesdits segments étant mobiles entre une position où les bras ne sont pas en contact avec les roues, et une position où chaque bras vient en contact avec la bande de roulement d'une desdites roues, pour assurer le relèvement ou la dépose du véhicule.

Avantageusement, ledit système de parking automatique selon la revendication précédente caractérisé en ce qu'il comporte un calculateur pour commander le déplacement du convoyeur sous le châssis d'un véhicule, par un déplacement de ledit convoyeur selon l'axe longitudinal dudit véhicule, puis le relèvement du véhicule par le déplacement desdits segments et bras du convoyeur, puis le déplacement du convoyeur jusqu'à un emplacement de destination, puis la libération du véhicule par le déplacement des bras et le retrait du convoyeur par un déplacement selon l'axe longitudinal du véhicule.

### Description détaillée d'exemples non limitatifs de l'invention

La présente invention sera mieux comprise à la lecture de la description qui suit, se référant à des exemples non limitatifs de réalisation illustrés par les dessins annexés où :
- la figure 1 représente une vue schématique en perspective d'un convoyeur selon un exemple de réalisation de l'invention
- les figures 2 à 8 représentent des vues schématiques du véhicule et du convoyeur à des étapes successives de chargement.
- La figure 9 représente une vue de perspective correspondant à une variante de réalisation de l'invention.
- les figures 10 à 11 représentent des vues schématiques correspondant à la variante de réalisation de l'invention de la figure 9.

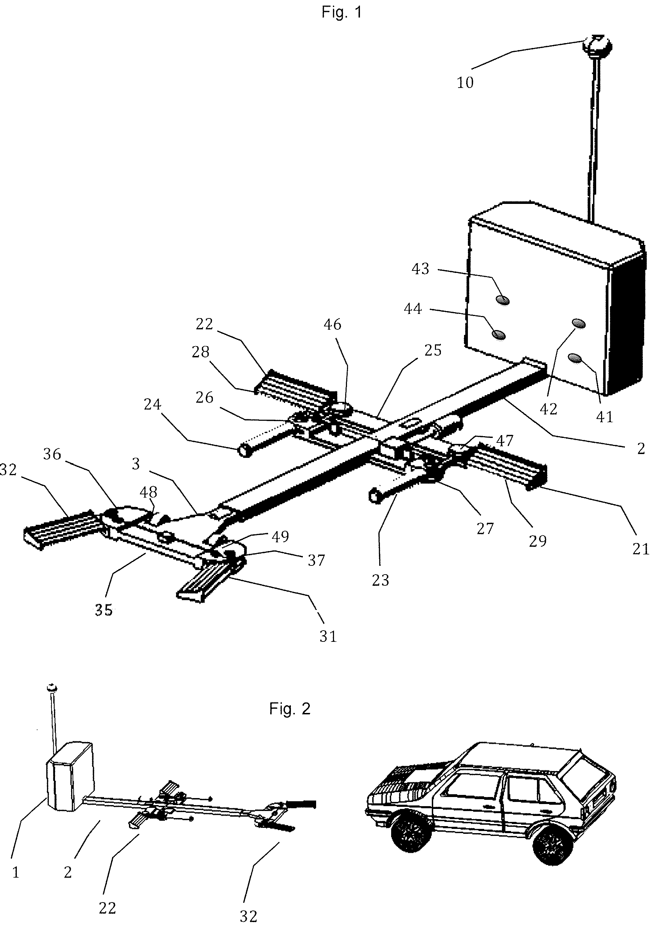

La figure 1 représente une vue en perspective d'un exemple de convoyeur selon l'invention. Il comprend un bloc avant (1) renfermant un moteur entraînant une roue directrice unique (alternativement, il est possible de prévoir deux roues directrices). Ce bloc avant (1) renferme aussi les circuits électroniques et un calculateur assurant le guidage autonome du convoyeur. Ce bloc avant (1) est surmonté d'un télémètre laser (10) grand angle fournissant les informations en temps réel au calculateur.

Ce bloc avant (1) est prolongé vers l'arrière par un bras (2) télescopique. Une partie escamotable (3) de ce bras est actionnée par un vérin ou un actionneur linéaire, par exemple à vis sans fin.

Le premier segment du bras (2) présente un bras transversal avant (25) qui est fixe et qui supporte deux prolongements fixes (21, 22), ainsi que deux prolongements escamotables (23, 24), mobiles en rotation par rapport à des pivots (26, 27). Ils sont entraînés par des vérins, pour se déplacer entre une position effacement, lors du chargement du véhicule, et une position escamotée de verrouillage, lors du transport du véhicule. En position escamotée, l'espacement des prolongements (21, 23) et (22, 24) est déterminé pour venir en contact avec les flancs avant et arrière du pneu du véhicule et par pincement en assurer l'élévation. A cet effet, les prolongements avant (21, 23) présentent une rampe inclinée (28, 29).

Lorsque les prolongements (22, 23) sont rabattus en position de verrouillage, ils bloquent le déplacement du véhicule par rapport au convoyeur.

La partie arrière (3) du bras (2) comporte également un bras transversal (35) prolongé par deux prolongements (31, 32) mobiles par rapport à des pivots (36, 37). Lors du chargement du véhicule, ces prolongements (31, 32), de même que les prolongements (21, 22), sont orientés sensiblement longitudinalement, parallèlement à l'axe principal du bras (2). La longueur L des bras (25, 35), mesurée entre les pivots respectivement (26, 27) et (36, 37) est inférieure à Vₘᵢₙ-Lₘᵢₙ, où :
- vₘᵢₙ désigne la voie usuelle et minimale d'une voiture, typiquement 1600 millimètres
- Lₘᵢₙ désigne la largeur usuelle du pneumatique d'une voiture, typiquement 220 millimètres.

La longueur L des bras est donc typiquement inférieure à 1400 millimètres, et de préférence de l'ordre de 1200 millimètres.

La longueur des prolongements fixes (21, 22) et mobiles (23, 24), (33, 34) est déterminée pour correspondre à la moitié de la largeur lₘₐₓ correspondant à la largeur d'une voiture de grande dimension moins la longueur du bras (25, 35), typiquement 500 millimètres pour chacun des prolongements.

Le convoyeur peut ainsi être positionné dans l'axe du véhicule afin de permettre le passage du bras (2) sous le châssis du véhicule avec les prolongements (23, 24, 33, 34) en position repliée, orientés sensiblement longitudinalement, jusqu'à ce que les rampes (28, 29) bras fixe (20, 21) viennent en butée contre les roues avant du véhicule. L'extension (3) du bras (2) est déplacée pour s'adapter à l'empattement de la voiture à charger. Les prolongements (23, 24, 33, 34) sont ensuite déplacés pour venir en position transversale, en contact avec les flancs arrières des roues du véhicule.

L'extension (3) est alors entraînée vers l'avant pour assurer le blocage des roues du véhicule.

Le bloc avant (1) comporte quatre capteurs télémétriques à ultrason (41 à 44) délivrant des signaux en fonction de la distance du pare-choc du véhicule.

Le bras avant (25) comporte deux capteurs de force ((46, 47) destinés à la détection et à la validation de la prise de véhicule.

Le bras arrière (35) comporte deux capteurs télémétrique laser (48, 49) de courte portée à balayage pour la détection des roues et des obstacles.

Le châssis formé par le bras (2, 3) et les bras (25, 35) présente des roulettes ou des galets pour permettre le roulage au sol.

Les figures 2 à 8 représentent des vues schématiques du véhicule et du convoyeur à des étapes successives de chargement.

Au départ, comme représenté en figure 2, le convoyeur vient se positionner correctement devant la voiture qui est stationnée sur une place de dépôt. Les bras mobiles (22, 23, 32, 33) sont rabattus en position longitudinale.

Le télémètre laser (10) fournit les informations pour commander le positionnement du convoyeur. Les télémètres laser courte portée (46, 47) détecte les roues avant du véhicule. Le convoyeur s'aligne sur la voiture.

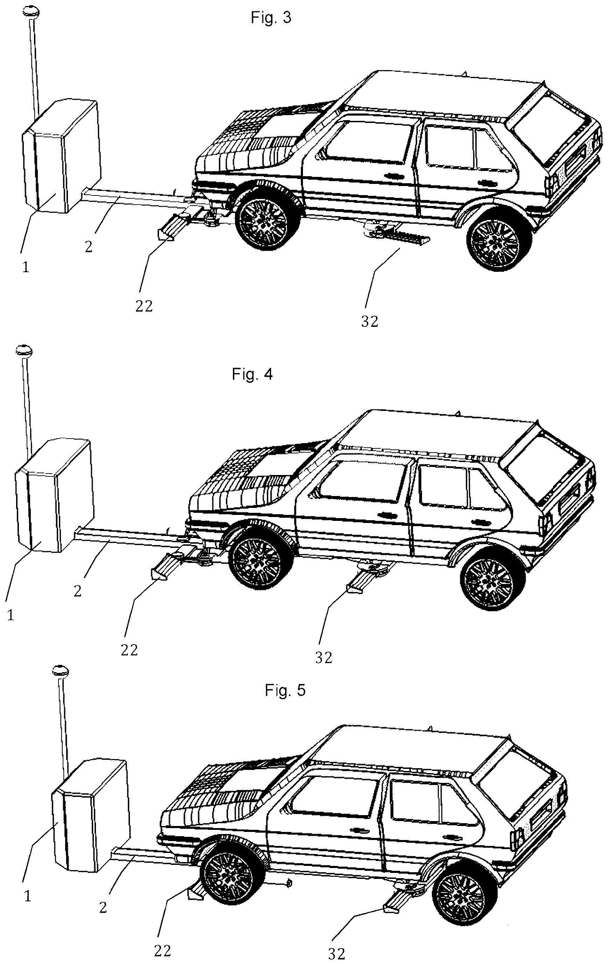

A l'étape suivante (figure 3), Le convoyeur vient positionner le bras (2) sous la voiture, avec un alignement longitudinal de l'axe du bras (2) et l'axe longitudinal du véhicule. Les télémètres à ultra-sons (41 à 43) détectent le pare-choc du véhicule pour commander l'arrêt du déplacement relatif du convoyeur par rapport au véhicule.

Les télémètres laser courte portée (48, 49) détectent les roues arrière du véhicule.

A l'étape suivante (figure 4), les prolongements mobiles arrières (32, 33) sont escamotés en position transversale.

Le convoyeur avance ensuite jusqu'à ce que les prolongements fixes (22, 23) avant rentrent en contact avec les roues avant (figure 5). Le bras (2) ajuste sa longueur en fonction de la longueur du porte-à-faux avant estimée par les télémètres à ultra-sons (41 à 44).

Les capteurs de forces (46, 47) indiquent que les roues sont en contact.

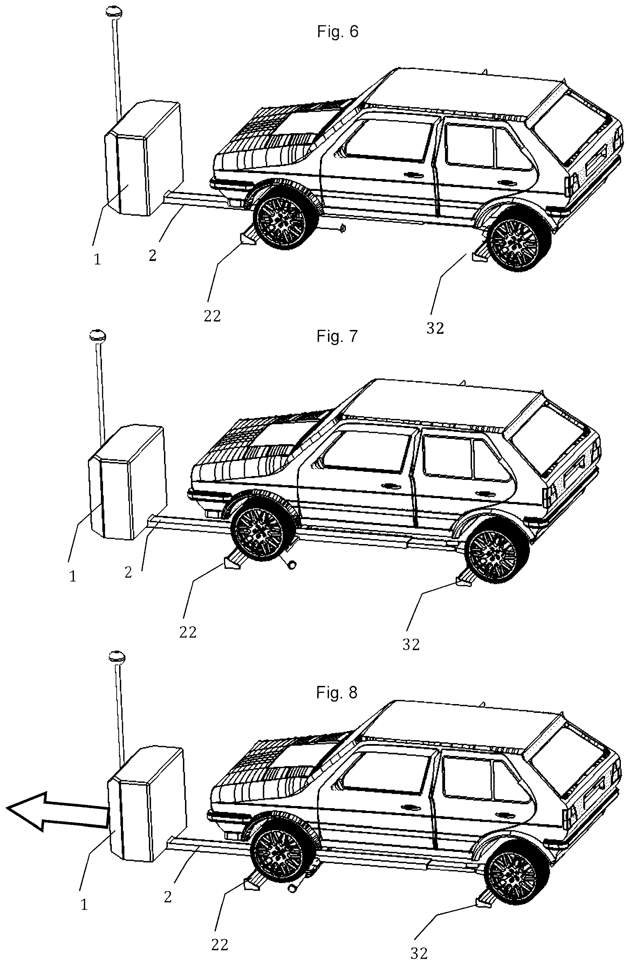

Le convoyeur ajuste ensuite (figure 6) la longueur du bras arrière (3) pour que les prolongements arrières (32, 33) touchent les roues arrières. Les capteurs de force (48, 49) indiquent que les roues sont en contact.

Les prolongements mobiles (23, 24) serrent les roues avant et font monter la voiture sur les rouleaux avant et arrière (figure 7), ce qui provoque l'élévation du véhicule.

Les capteurs de force (48, 49) valident que la voiture est montée sur les rouleaux (figure 8), et le convoyeur est déplacé automatiquement pour emmener le véhicule à l'emplacement cible. Le télémètre laser (10) détecte les obstacles. Il arrête le robot en urgence si besoin.

### Variante de réalisation

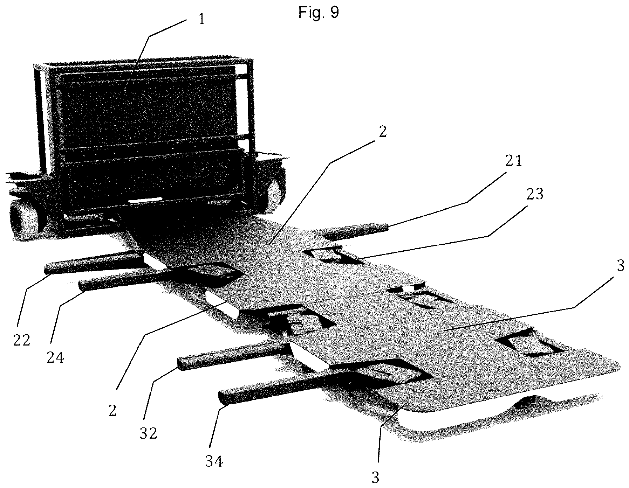

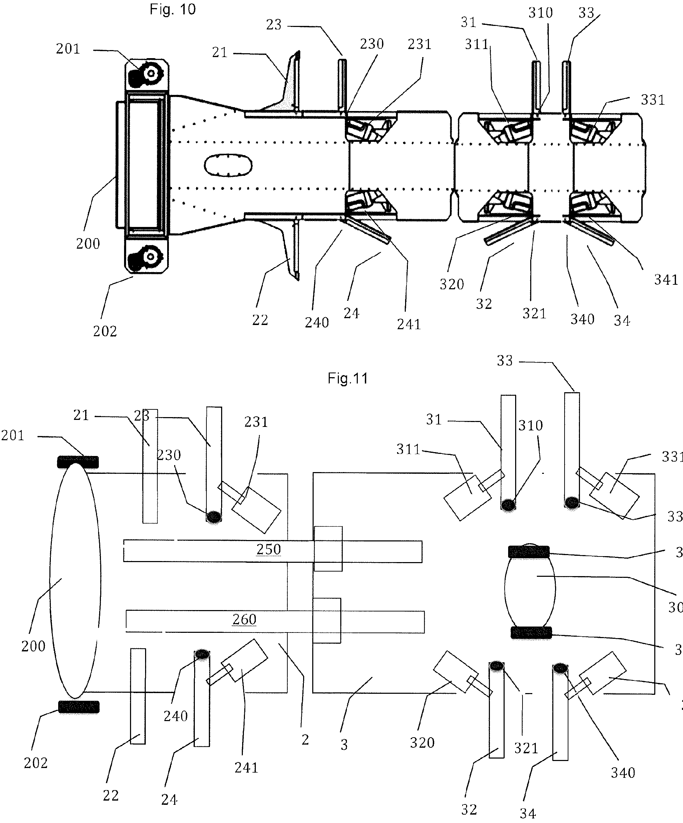

Les figures 9 et 11 représentent une variante de réalisation où le levage du véhicule est assuré par des coussins de levage (200, 300).

Le convoyeur est constitué par un châssis formé de deux caissons (2, 3) d'une épaisseur d'environ 50 millimètres, reliés par une paire de rails profilés (250, 260) à recirculation de billes de type ROLLON (marque commerciale). Le châssis forme ainsi un plateau escamotable constitué de d'un premier segment (2) solidaire du bloc motorisé (1), et d'un deuxième segment (3) qui peut être écarté sous l'action d'un vérin électrique ou pneumatique grâce aux rails profilés (250, 260) à recirculation de billes.

Le châssis est donc constitué de deux parties seulement, escamotables pour permettre une adaptation à l'empattement du véhicule à déplacer.

Le segment (3) est muni d'une platine (300) pivotant comportant des roulettes libres (301, 302). Un coussin ou un mécanisme de levage est intercalé entre la structure du segment (3) et la platine (300) de façon à permettre une variation de la hauteur entre une position affaissée où le segment (3) peut être glissé sous le véhicule, et une position relevée où il permet de lever le véhicule afin que ses roues quittent le contact avec le sol.

L'amplitude du mouvement est typiquement de quelques centimètres.

Le coussin de levage est par exemple constitué par une enveloppe gonflable comprenant deux feuilles rectangulaires en polyaramide tissé. Une valve pneumatique est insérée dans un coin de l'enveloppe.

Alternativement la platine (300) est reliée à la structure du segment (3) par un moyen extensible de type cric hydraulique à huile ou cric électrique, avec une structure articulée déformable par une vis entraînée par un moteur électrique par exemple.

De la même façon, l'ensemble formé par le bloc motorisé (1) et le segment (2) comporte une platine (200) montée sur un coussin ou une structure de relevage. La platine (200) est équipée de roues motrices (201, 202).

Alternativement, l'ensemble formé par le bloc motorisé (1) et le segment (2) comprend des roues motrices (201, 202) constituées par des unités d'entraînement telle que décrite dans le brevet européen EP1795431. Ces unités d'entraînement (201, 202) sont dotée d'un moteur de direction comprenant un arbre de moteur de direction et un mécanisme d'entraînement orientable composé d'un moteur électrique, d'une boîte de vitesses et d'un frein.

Alternativement, le segment (2) est associé à un timon tracteur-pousseur par un mécanisme de réglage de la hauteur.

Dans tous les cas, le mécanisme de levage commande la garde au sol du premier segment (2) de façon à permettre une variation de la hauteur entre une position affaissée où le segment (2) peut être glissé sous le véhicule, et une position relevée où il permet de lever le véhicule afin que ses roues quittent le contact avec le sol. L'amplitude du mouvement est typiquement de quelques centimètres.

Le segment (3) forme un caisson creux présentant de chaque coté une paire de bras (31, 33 ; 32, 34) articulés autour de pivots respectivement (310, 330 ; 320, 340) entre une position où les bras sont rabattus pour occuper une position sensiblement longitudinale, avec un angle inférieur à 20° par rapport à l'axe longitudinal afin de réduire la largeur du convoyeur et permettre de le glisseur sous le véhicule, entre les roues. Dans la position escamotée, les bras (31, 33 ; 32, 34) s'étendent perpendiculairement à l'axe longitudinal. Dans cette dernière position, les bords intérieurs de chaque bras viennent en appui contre la bande de roulement du pneu de la voiture. Lorsque le système de relevage est actionné, il provoque la perte du contact du pneu avec le sol.

Le déplacement des bras (21, 33 ; 32, 34) et assuré par des vérins (311, 331 ; 321, 341) hydrauliques, pneumatiques ou électriques.

Le segment (2) forme un également un caisson creux présentant de chaque coté un bras fixe (21, 22) et un bras mobile (23, 24) articulés autour de pivots respectivement (230, 240) entre une position où les bras sont rabattus pour occuper une position sensiblement longitudinale, avec un angle inférieur à 20° par rapport à l'axe longitudinal afin de réduire la largeur du convoyeur et permettre de le glisseur sous le véhicule, entre les roues. Dans la position escamotée, les bras (21, 23 ; 22, 24) s'étendent perpendiculairement à l'axe longitudinal. Dans cette dernière position, les bords intérieurs de chaque bras viennent en appui contre la bande de roulement du pneu de la voiture. Lorsque le système de relevage est actionné, il provoque la perte du contact du pneu avec le sol.

Le déplacement des bras (23, 24) et assuré par des vérins (231, 241) hydrauliques, pneumatiques ou électriques.

Le déplacement du segment (3) par rapport au segment (2) permet d'adapter le convoyeur à l'empattement de chaque véhicule.

## Revendications

1. Convoyeur pour le déplacement de véhicules à quatre roues, le convoyeur comprenant un châssis (2, 3) muni de prolongements escamotables latéralement (23, 24, 32, 31) mobiles entre une position dans laquelle ils permettent le déplacement dudit châssis sous le véhicule, et une position dans laquelle ils viennent en contact avec les bandes de roulement desdites roues, le convoyeur étant de manière en ce que ledit châssis (2, 3) est télescopique et comprend deux segments (2, 3) portant chacun une paire de bras (25, 35),
- l'une au moins des paires de bras (25, 35) étant articulés pour permettre un déplacement entre une position perpendiculaire à l'axe longitudinal du châssis avec un extension au moins égale à la voie du véhicule, et une position repliée pour occuper une largeur inférieure à la distance comprise entre les flancs intérieurs des roues du véhicule,
- lesdits segments (2, 3) étant mobiles entre une position où les bras ne sont pas en contact avec les roues, et une position où chaque bras vient en contact avec la bande de roulement d'une desdites roues, pour assurer le relèvement ou la dépose du véhicule,
- ladite paire de bras articulée (25, 35) est mobile par pivotement de prolongements (23, 24, 31, 32), le convoyeur étant **caractérisé en ce que**
- le convoyeur comprend un bloc avant (1) renfermant un moteur entraînant une ou deux roue(s) directrice(s), le bloc avant (1) aussi referme des circuits électroniques et un calculateur assurant le guidage autonome du convoyeur,
- le bloc avant (1) est surmonté d'un télémètre laser (10) grand angle fournissant les informations en temps réel au calculateur.

2. Convoyeur selon la revendication 1 **caractérisé en ce que** le relèvement ou la dépose du véhicule est assuré par un premier moyen de soulèvement disposé entre le premier segment (2) et une première platine portant un premier système de roulage, et un deuxième moyen de soulèvement disposé entre le deuxième segment (3) et une deuxième platine portant un deuxième système de roulage.

3. Convoyeur selon l'une au moins des revendications 1 à 2 **caractérisé en ce que** ladite paire de bras articulée (25, 35) est mobile transversalement.

4. Convoyeur selon l'une au moins des revendications 1 à 2 **caractérisé en ce que** ledit relèvement du véhicule est assuré par l'interaction, de chaque côté du véhicule, entre le bras arrière (35) avec l'arrière de la zone de la bande de roulement de la roue arrière d'une part, et entre le bras avant avec l'avant de la zone de la bande de roulement de la roue avant d'autre part.

5. Convoyeur selon l'une au moins des revendications 1 à 2 **caractérisé en ce que** ledit relèvement du véhicule est assuré par l'interaction, de chaque côté du véhicule, entre le bras arrière (35) avec l'avant de la zone de la bande de roulement de la roue arrière d'une part, et entre le bras avant (25) avec l'arrière de la zone de la bande de roulement de la roue avant d'autre part.

6. Convoyeur selon l'une au moins des revendications 1 à 2 **caractérisé en ce que** ledit relèvement du véhicule est assuré par l'interaction entre l'un desdits bras (25, 35) avec l'une des parties de la bande de roulement d'une roue et un bras additionnel venant en contact avec une partie opposée de la bande de roulement de la même roue.

7. Système de parking automatique comprenant au moins un convoyeur selon l'une quelconque des revendications 1-6 pour le déplacement de véhicules à quatre roues, le convoyeur comprenant un châssis (2, 3) muni de bras mobiles (25, 35) entre une position dans laquelle ils permettent le déplacement dudit châssis (2, 3) sous le véhicule, et une position dans laquelle ils viennent en contact avec les bandes de roulement desdites roues, **caractérisé en ce que** ledit châssis (2, 3) est télescopique et comprend deux segments (2, 3) portant chacun une paire de bras (25, 35) , l'une au moins des paires de bras (25, 35) étant articulés pour permettre un déplacement entre une position perpendiculaire à l'axe longitudinal du châssis avec un extension au moins égale à la voie du véhicule, et une position repliée pour occuper une largeur inférieure à la distance comprise entre les flancs intérieurs des roues du véhicule,
lesdits segments (2, 3) étant mobiles entre une position où les bras (25, 35) ne sont pas en contact avec les roues, et une position où chaque bras (25, 35) vient en contact avec la bande de roulement d'une desdites roues, pour assurer le relèvement ou la dépose du véhicule.

8. Système de parking automatique selon la revendication précédente **caractérisé en ce qu'**il comporte un calculateur pour commander le déplacement du convoyeur sous le châssis (2, 3) d'un véhicule, par un déplacement dudit convoyeur selon l'axe longitudinal dudit véhicule, puis le relèvement du véhicule par le déplacement desdits segments (2, 3) et bras (25, 35) du convoyeur, puis le déplacement du convoyeur jusqu'à un emplacement de destination, puis la libération du véhicule par le déplacement des bras (25, 35) et le retrait du convoyeur par un déplacement selon l'axe longitudinal du véhicule.

## Patentansprüche

1. Förderer zum Bewegen von vierrädrigen Fahrzeugen, wobei der Förderer einen Unterwagen (2, 3) aufweist, der mit seitlich einziehbaren Verlängerungen (23, 24, 32, 31) versehen ist, die zwischen einer Position, in der sie die Bewegung des Unterwagens unter dem Fahrzeug ermöglichen, und einer Position, in der sie in Kontakt mit den Laufflächen der Räder kommen, beweglich sind, wobei der Förderer derart ist, dass der Unterwagen (2, 3) teleskopisch ist und zwei Segmente (2, 3) aufweist, die jeweils ein Paar Arme (25, 35) tragen,
- wobei mindestens eines der Paare von Armen (25, 35) gelenkig ist, um eine Bewegung zwischen einer Position senkrecht zur Längsachse des Unterwagens mit einer Ausdehnung, die mindestens gleich der Spurweite des Fahrzeugs ist, und einer Position, die zurückgeklappt ist, um eine Breite einzunehmen, die geringer ist als der Abstand zwischen den inneren Flanken der Fahrzeugräder, zu ermöglichen,
- wobei die Segmente (2, 3) zwischen einer Position, in der die Arme nicht in Kontakt mit den Rädern sind, und einer Position, in der jeder Arm in Kontakt mit der Lauffläche eines der Räder kommt, beweglich sind, um das Anheben oder das Absenken des Fahrzeugs zu gewährleisten,
- wobei das Paar von Gelenkarmen (25, 35) durch Schwenken der Verlängerungen (23, 24, 31, 32) beweglich ist, wobei der Förderer **dadurch gekennzeichnet ist, dass**
- der Förderer einen vorderen Block (1) aufweist, der einen Motor einschließt, der ein lenkbares Rad oder zwei lenkbare Räder antreibt, wobei der vordere Block (1) auch elektronische Schaltungen und einen Rechner einschließt, der die autonome Führung des Förderers gewährleistet,
- der vordere Block (1) von einem Weitwinkel-Laserentfernungsmesser (10) überragt wird, der die Informationen in Echtzeit an den Rechner liefert.

2. Förderer nach Anspruch 1, **dadurch gekennzeichnet, dass** das Anheben oder Absenken des Fahrzeugs durch ein erstes Hebemittel, das zwischen dem ersten Segment (2) und einer ersten Platte, die ein erstes Rollsystem trägt, angeordnet ist, und ein zweites Hebemittel, das zwischen dem zweiten Segment (3) und einer zweiten Platte, die ein zweites Rollsystem trägt, angeordnet ist, gewährleistet wird.

3. Förderer nach mindestens einem der Ansprüche 1 bis 2, **dadurch gekennzeichnet, dass** das Paar von Gelenkarmen (25, 35) quer beweglich ist.

4. Förderer nach mindestens einem der Ansprüche 1 bis 2, **dadurch gekennzeichnet, dass** das Anheben des Fahrzeugs durch Wechselwirkung auf jeder Seite des Fahrzeugs zwischen dem hinteren Arm (35) mit dem hinteren Teil des Laufflächenbereichs des Hinterrads einerseits und zwischen dem vorderen Arm mit dem vorderen Teil des Laufflächenbereichs des Vorderrads andererseits gewährleistet ist.

5. Förderer nach mindestens einem der Ansprüche 1 bis 2, **dadurch gekennzeichnet, dass** das Anheben des Fahrzeugs durch Wechselwirkung auf jeder Seite des Fahrzeugs zwischen dem hinteren Arm (35) mit dem vorderen Teil des Laufflächenbereichs des Hinterrads einerseits und zwischen dem vorderen Arm (25) mit dem hinteren Teil des Laufflächenbereichs des Vorderrads andererseits gewährleistet ist.

6. Förderer nach mindestens einem der Ansprüche 1 bis 2, **dadurch gekennzeichnet, dass** das Anheben des Fahrzeugs durch die Wechselwirkung zwischen einem der Arme (25, 35) mit einem der Abschnitte der Lauffläche eines Rades und einem zusätzlichen Arm, der mit einem gegenüberliegenden Abschnitt der Lauffläche desselben Rades in Kontakt kommt, gewährleistet ist.

7. Automatisches Parksystem, das mindestens einen Förderer nach einem der Ansprüche 1 bis 6 für die Bewegung von vierrädrigen Fahrzeugen aufweist, wobei der Förderer einen Unterwagen (2, 3) aufweist, der mit beweglichen Armen (25, 35) versehen ist, die zwischen einer Position, in der sie die Bewegung des Unterwagens (2, 3) unter dem Fahrzeug ermöglichen, und einer Position, in der sie mit den Laufflächen der Räder in Kontakt kommen, beweglich sind, **dadurch gekennzeichnet, dass** der Unterwagen (2, 3) teleskopisch ist und zwei Segmente (2, 3) aufweist, die jeweils ein Paar von Armen (25, 35) tragen, wobei mindestens eines der Paare von Armen (25, 35) gelenkig ist, um eine Bewegung zwischen einer Position senkrecht zur Längsachse des Unterwagens mit einer Ausdehnung, die mindestens gleich der Spurweite des Fahrzeugs ist, und einer Position, die zurückgeklappt ist, um eine Breite einzunehmen, die geringer ist als der Abstand zwischen den inneren Flanken der Räder des Fahrzeugs, zu ermöglichen, wobei die Segmente (2, 3) zwischen einer Position, in der die Arme (25, 35) nicht in Kontakt mit den Rädern sind, und einer Position, in der jeder Arm (25, 35) in Kontakt mit der Lauffläche eines der Räder kommt, beweglich sind, um das Anheben oder Absenken des Fahrzeugs zu gewährleisten.

8. Automatisches Parksystem nach dem vorhergehenden Anspruch, **dadurch gekennzeichnet, dass** es einen Rechner umfasst, um die Bewegung des Förderers unter den Unterwagen (2, 3) eines Fahrzeugs durch eine Bewegung des Förderers entlang der Längsachse des Fahrzeugs, dann das Anheben des Fahrzeugs durch die Bewegung der Segmente (2, 3) und der Arme (25, 35) des Förderers, dann die Bewegung des Förderers bis zu einem Zielort, dann die Freigabe des Fahrzeugs durch die Bewegung der Arme (25, 35) und das Zurückziehen des Förderers durch eine Bewegung entlang der Längsachse des Fahrzeugs zu steuern.

## Claims

1. Conveyor for moving four-wheeled vehicles, the conveyor comprising a frame (2, 3) provided with laterally retractable extensions (23, 24, 32, 31) which are movable between a position in which they allow the movement of said frame under the vehicle, and a position in which they come into contact with the treads of said wheels, the conveyor being such that said frame (2, 3) is telescopic and comprises two segments (2, 3) each carrying a pair of arms (25, 35),
- at least one of the pairs of arms (25, 35) being articulated to allow movement between a position perpendicular to the longitudinal axis of the frame with an extension at least equal to the track of the vehicle, and a folded-up position to occupy a width which is less than the distance between the inner sides of the vehicle wheels,
- said segments (2, 3) being movable between a position where the arms are not in contact with the wheels, and a position where each arm comes into contact with the tread of one of said wheels, to raise or lower the vehicle,
- said pair of articulated arms (25, 35) being movable by pivoting extensions (23, 24, 31, 32), the conveyor being **characterized in that**
- the conveyor comprises a front unit (1) containing a motor driving one or two drive wheel(s), the front unit (1) also contains electronic circuits and a computer ensuring the autonomous guidance of the conveyor, and
- the front unit (1) has a wide-angle laser telemeter (10) mounted thereon providing real-time information to the computer.

2. Conveyor according to claim 1, **characterized in that** the raising or the lowering of the vehicle is ensured by a first lifting means arranged between the first segment (2) and a first plate carrying a first rolling system, and a second lifting means arranged between the second segment (3) and a second plate carrying a second rolling system.

3. Conveyor according to at least one of claims 1 to 2, **characterized in that** said pair of articulated arms (25, 35) is movable transversely.

4. Conveyor according to at least one of claims 1 to 2, **characterized in that** said raising of the vehicle is ensured by the interaction, on each side of the vehicle, between the rear arm (35) with the rear of the zone of the rear wheel tread and between the front arm with the front of the zone of the front wheel tread.

5. Conveyor according to at least one of claims 1 to 2, **characterized in that** said raising of the vehicle is ensured by the interaction, on each side of the vehicle, between the rear arm (35) with the front of the zone of the rear wheel tread and between the front arm (25) with the rear of the zone of the front wheel tread.

6. Conveyor according to at least one of claims 1 to 2, **characterized in that** said raising of the vehicle is ensured by the interaction between one of said arms (25, 35) with one of the parts of the tread of a wheel and an additional arm coming into contact with an opposite part of the tread of the same wheel.

7. Automatic parking system comprising at least one conveyor according to one of claims 1 to 6 for moving four-wheeled vehicles, the conveyor comprising a frame (2, 3) provided with movable arms (25, 35) which are movable between a position in which they allow the movement of said frame (2, 3) under the vehicle, and a position in which they come into contact with the treads of said wheels, **characterized in that** said frame (2, 3) is telescopic and comprises two segments (2, 3) each carrying a pair of arms (25, 35), at least one of the pairs of arms (25, 35) being articulated to allow movement between a position perpendicular to the longitudinal axis of the frame with an extension at least equal to the track of the vehicle, and a folded-up position to occupy a width less than the distance between the inner sides of the wheels of the vehicle, said segments (2, 3) being movable between a position where the arms (25, 35) are not in contact with the wheels, and a position where each arm (25, 35) comes into contact with the tread of one of said wheels, to ensure the raising or the lowering of the vehicle.

8. Automatic parking system according to the preceding claim, **characterized in that** it comprises a computer for controlling the movement of the conveyor under the frame (2, 3) of a vehicle, by means of moving said conveyor along the longitudinal axis of said vehicle, then raising the vehicle by moving said segments (2, 3) and arms (25, 35) of the conveyor, then moving the conveyor to a destination location, then releasing the vehicle by moving the arms (25, 35) and removing the conveyor by means of a movement along the longitudinal axis of the vehicle.
